# EUROPEAN PATENT APPLICATION

(11) **EP 3 479 957 A1**
(43) Date of publication of application: **08.05.2019**
(21) Application number: 17880778.0
(22) Date of filing: 24.11.2017
(51) Int. Cl.: B24B 23/02, B24B 45/00, H02K 7/14, B24B 47/12

(54) **ROTATION DEVICE**

(30) Priority: 16.12.2016 KR 20160172869; 03.02.2017 KR 20170015669; 02.05.2017 KR 20170056427; 13.11.2017 KR 20170150397
(71) Applicant: Miretec Co., Ltd., Ulju-gun, Ulsan 44936 (KR)
(72) Inventor: KIM, Im Suk, Ulsan 44691 (KR)
(74) Representative: Zimmermann, Tankred Klaus
(86) International application number: PCT/KR2017/013518
(87) International publication number: WO 2018/110856

(57) **Abstract**

A rotation apparatus is disclosed. A rotation apparatus according to an embodiment comprises: a body, which is connected to a power generation part, such as a motor, to rotate a member to be rotated and comprises a driving shaft formed at a side thereof and coupled to the power generation part, a disc-shaped seating part formed at another side thereof, multiple fixing protrusions protruding at an uniform interval on an edge portion of an upper surface of the seating part, a boss protruding from the center thereof, and multiple latching protrusions formed on the outer peripheral surface of the boss; a locking part coupled to the upper surface of the seating part to make in contact with the upper surface of the seating part, the locking part performing a locking function, and connected to the member to be rotated; and a reverse rotation prevention means maintaining a coupling state between the locking part and the body, and preventing a reverse rotation.

## Description

### TECHNICAL FIELD

The disclosure relates to a rotating apparatus, and more particularly, to a rotating apparatus rotating by receiving the power of a rotating shaft, thereby preventing a reverse rotation while maintaining stable rotation of an interlocking member such as a disk.

### BACKGROUND

Unless otherwise indicated herein, the description in this section is not a prior art to the claims of the present invention, and are not construed as being a prior art although it is included in this section.

A rotating apparatus receives rotational force of a motor and rotates various interlocking members connected to a motor shaft.

Therefore, it has to transmit the rotational force accurately and maintain a high-speed rotation stably while preventing a reverse rotation.

One example of the rotating apparatus includes a hand grinder. The hand grinder is a type of electric tool, in which an abrasive material is mounted to a rotating shaft operating at a high-speed due to the motor drive or compressor air pressure to polish and luster a surface of an object made of wood, stone, or various metals, or to finish the work by grinding a portion or an edge that was less machined.

The abrasive material is manufactured in various shapes and forms according to the quality of a material or a size of the object, and integrated into the polishing holder.

The grinding holder may be mounted on a rotating shaft exposed from a main body of the grinder.

A technique has been disclosed in which a grindstone shaft may be mounted using a collet or may be fixed by a chucking apparatus in order to fasten the holder mounted with an abrasive material to the rotating shaft of the hand grinder. However, these prior arts are complicated in the structure and have a very high manufacturing cost.

### SUMMARY

### TECHNICAL PROBLEMS

It is an object of the present disclosure to provide a rotating apparatus capable of stably maintaining rotation of an abrasive material such as a polishing disc by receiving power of a rotating shaft of a motor, capable of providing a locking function to prevent the abrasive material from being separated during high-speed rotation, and capable of preventing a reverse rotation.

### SUMMARY OF THE INVENTION

The object of an embodiment may be achieved by a rotating apparatus, comprising: a body connected to a power generating unit such as a motor to rotate a member to be rotated, the body including a driving shaft coupled to the power generating unit on a side thereof, a disc-shaped seating part formed at another side thereof, a plurality of fixing protrusions protruding at an uniform interval on an edge portion of an upper surface of the seating part, a boss protruding from a center thereof, and a plurality of latching protrusions formed on an outer peripheral surface of the boss; a locking part coupled to an upper surface of the seating part to make in contact with the upper surface of the seating part, the locking part performing a locking function, and connected to the member to be rotated; and a reverse rotation preventing means maintaining a coupling state between the locking part and the body, and preventing a reverse rotation.

### EFFECT OF THE INVENTION

According to the disclosed embodiment, it is possible to provide a rotating apparatus capable of stably maintaining rotation of an abrasive material such as a polishing disc by receiving power of a rotating shaft of a motor, capable of providing a locking function to prevent the abrasive material from being separated during high-speed rotation, and capable of preventing a reverse rotation.

### BRIEF DESCRIPTION OF THE DRAWINGS

FIG. 1 is a front exploded perspective view illustrating a rotating apparatus according to an embodiment,
FIG. 2 is a rear exploded perspective view illustrating a rotating apparatus according to an embodiment,
FIG. 3 is an assembled cross-sectional view illustrating a rotating apparatus according to an embodiment,
FIGs. 4 and 5 are plan views illustrating the operation of a first locking means in a rotating apparatus according to an embodiment,
FIGs. 6 and 7 are cross-sectional views illustrating the operation of a first locking means in a rotating apparatus according to an embodiment,
FIG. 8 is a partial cross-sectional perspective view corresponding to FIG. 6,
FIG. 9 is a partial cross-sectional perspective view corresponding to FIG. 7,
FIG. 10 is a perspective view illustrating a body in a rotating apparatus according to another embodiment,
FIG. 11 is a front view of a body in a rotating apparatus according to another embodiment,
FIG. 12 is a perspective view illustrating a locking part in a rotating apparatus according to another embodiment,
FIG. 13 is a plan view of the locking part in FIG. 12,
FIG. 14 is a bottom view of the locking part in FIG. 12,
FIG. 15 is a perspective view illustrating an example of using a rotating apparatus according to another embodiment,
FIG. 16 is a cross-sectional view of FIG. 15,
FIG. 17 is a front exploded perspective view illustrating a rotating apparatus according to a third embodiment,
FIG. 18 is a rear exploded perspective view illustrating a rotating apparatus according to the third embodiment,
FIG. 19 is a coupled cross-sectional view illustrating the rotating apparatus according to the third embodiment,
FIG. 20 is a rear exploded perspective view illustrating a rotating apparatus according to a fourth embodiment,
FIG. 21 is a coupled cross-sectional view illustrating a rotating apparatus according to the fourth embodiment,

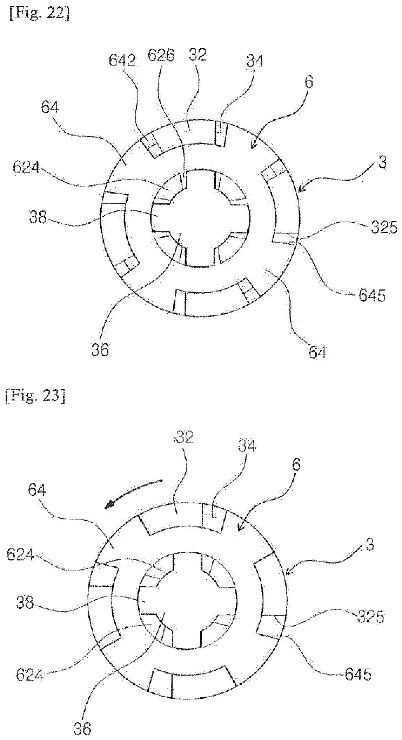

FIGs. 22 and 23 are plan views illustrating the operation of a first locking means in a rotating apparatus according to an embodiment,

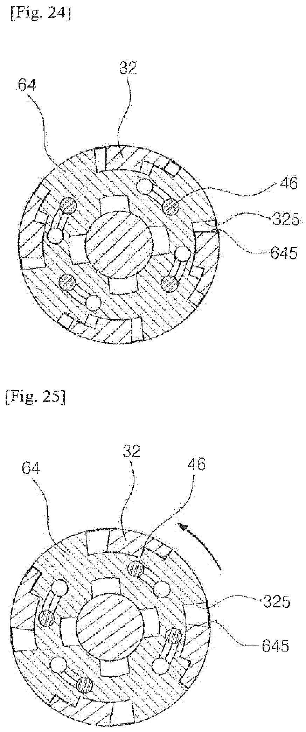

FIG. 24 and 25 are cross-sectional views illustrating the operation of a first locking means in a rotating apparatus according to an embodiment,

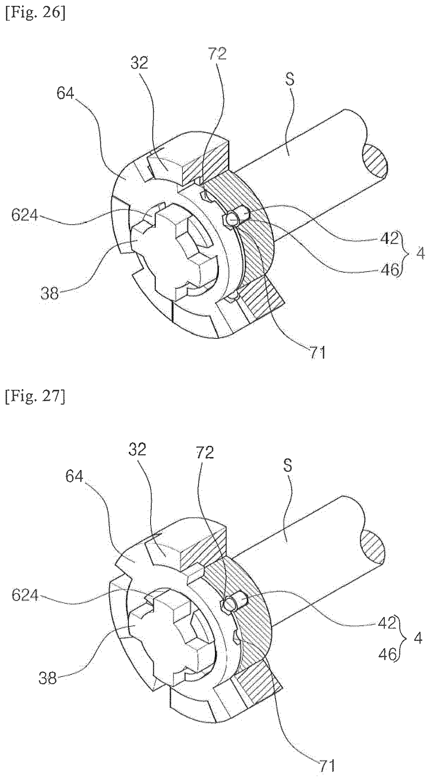

FIG. 26 is a partial cross-sectional perspective view corresponding to FIG. 22,
FIG. 27 is a partial cross-sectional perspective view corresponding to FIG. 23,
FIG. 28 is an exploded perspective view illustrating a rotating apparatus according to a fifth embodiment,
FIG. 29 is a perspective view illustrating the coupling and disengagement of the rotating apparatus according to the fifth embodiment,
FIG. 30 is a perspective view illustrating a rotating apparatus according to an sixth embodiment,

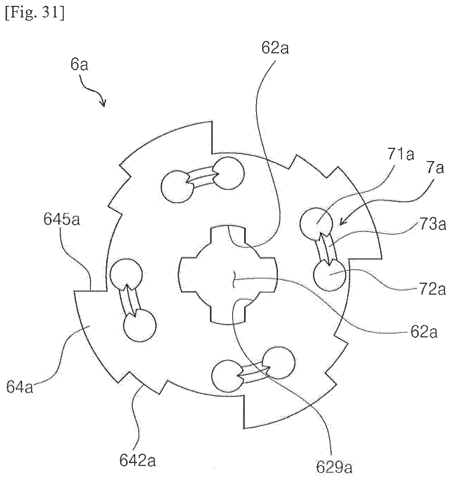

FIG. 31 is a plan view of a locking part in FIG. 28,

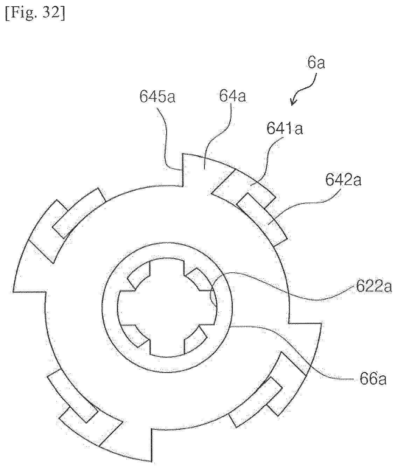

FIG. 32 is a bottom view of the locking part in FIG. 28,
FIG 33 is a perspective view illustrating an example of using a rotating apparatus according to another embodiment,
FIG. 34 is a cross-sectional view of FIG. 33,
FIG. 35 is an exploded perspective view illustrating a rotating apparatus according to a seventh embodiment of the present invention,
FIG. 36 is a coupled plan view illustrating a coupled example in FIG. 35,
FIG. 37 is an exploded perspective view illustrating a rotating apparatus according to an eighth embodiment of the present invention,
FIG. 38 is a coupled plan view illustrating a coupled example in FIG. 37,
FIG. 39 is an exploded perspective view illustrating a rotating apparatus according to a ninth embodiment of the present invention,
FIG. 40 is a coupled plan view illustrating a coupled example in FIG. 39,
FIG. 41 is an exploded perspective view illustrating a rotating apparatus according to a tenth embodiment of the present invention,
FIG. 42 is a coupled plan view illustrating a coupled example in FIG. 41,
FIG. 43 is an exploded perspective view illustrating a rotating apparatus according to an eleventh embodiment of the present invention,
FIG. 44 is a coupled plan view illustrating a coupled example in FIG. 43,
FIG. 45 is an exploded perspective view illustrating a rotating apparatus according to a twelfth embodiment of the present invention, and
FIG. 46 is a coupled plan view illustrating a coupled example in FIG. 45.

### DETAILED DESCRIPTION OF THE DISCLOSURE

Hereinafter, preferred embodiments of the present invention will be described in detail with reference to the accompanying drawings.

The embodiments to be described below are intended to be illustrative of the present invention so that those skilled in the art may easily carry out the invention, but the technical spirit and scope of the present invention are not limited thereto.

In addition, a size or shape of components shown in the drawings may be exaggerated for clarity and convenience of explanation. The terms defined in consideration of the configuration and operation of the present invention may be changed according to the intention or custom of a user or an operator, in which the definitions of these terms are based on the contents throughout this specification.

### Embodiment 1

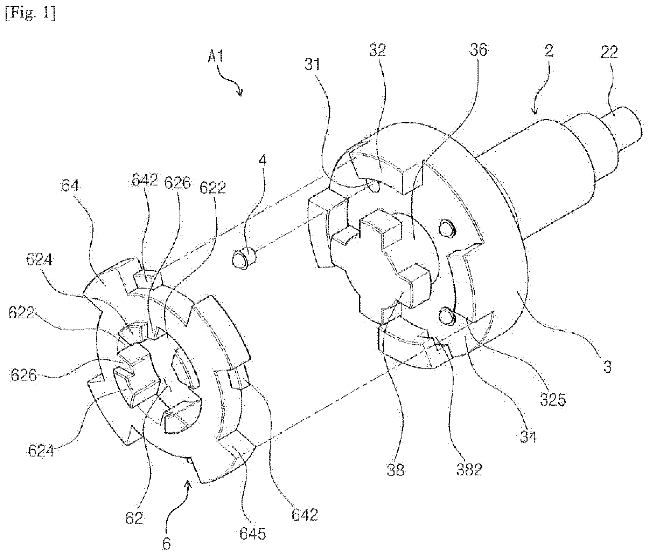

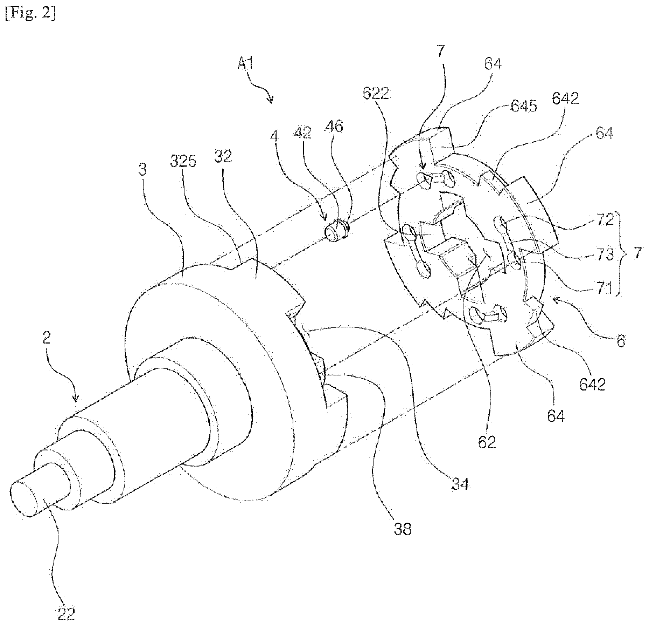

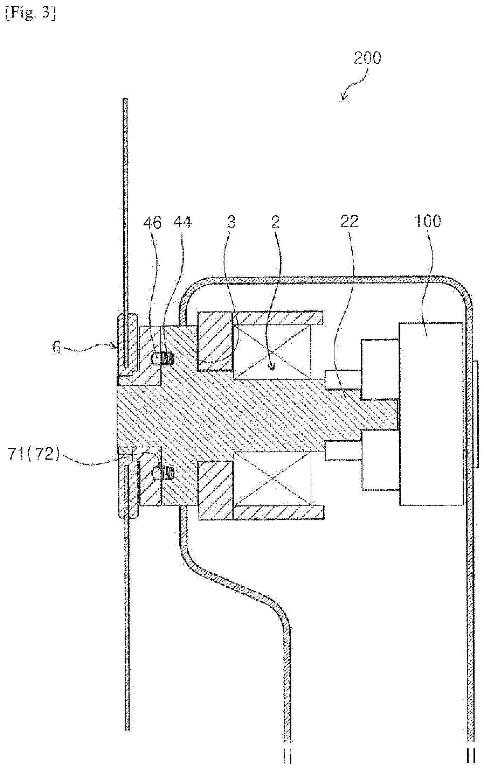

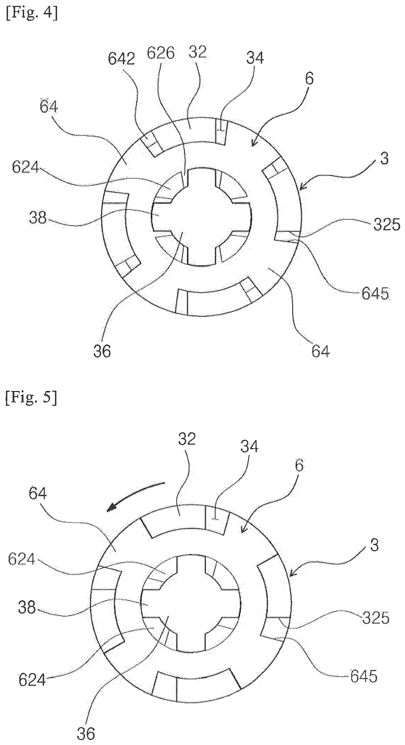

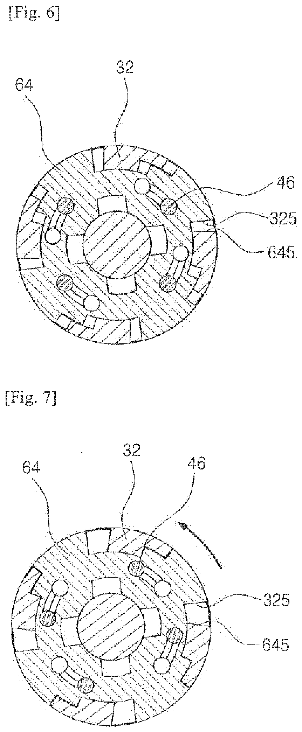

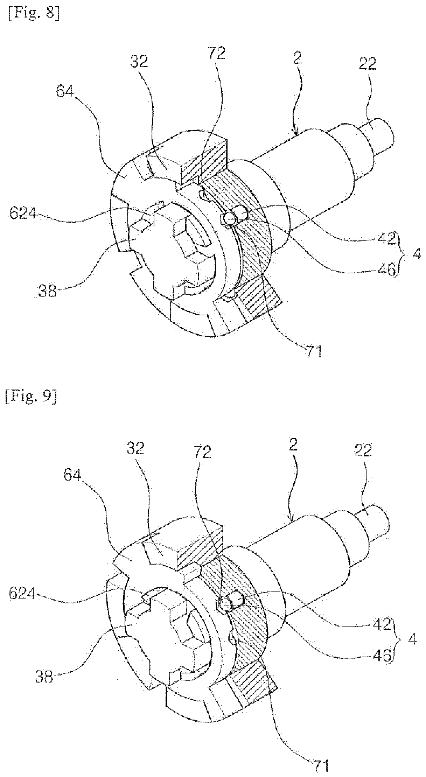

In the accompanying drawings, FIG. 1 is a front exploded perspective view illustrating a rotating apparatus according to an embodiment, FIG. 2 is a rear exploded perspective view illustrating a rotating apparatus according to an embodiment, FIG. 3 is an assembled cross-sectional view illustrating a rotating apparatus according to an embodiment, FIGs. 4 and 5 are plan views illustrating the operation of a first locking means in a rotating apparatus according to an embodiment, FIGs. 6 and 7 are cross-sectional views illustrating the operation of a first locking means in a rotating apparatus according to an embodiment, FIG. 8 is a partial cross-sectional perspective view corresponding to FIG. 6, and FIG. 9 is a partial cross-sectional perspective view corresponding to FIG. 7.

A rotating apparatus according to an embodiment includes a body 2 connected to a power generating unit 100 such as a motor to rotate a member to be rotated 200; a locking part 6 coupled to the body 2 and mounted with the member to be rotated 200; and a reverse rotation preventing means 4 for maintaining a coupling state of the locking part 6 and the body 2 and for preventing a reverse rotation.

The member to be rotated 200 is rotated by rotational force of the power generating unit 100, and an example thereof is an abrasive disc of a hand grinder.

Of course, the member to be rotated 200 is not limited to the abrasive disc but may be widely applied.

A driving shaft 22 coupled to a power generating unit 100 is formed at a side of the body 2 and a disc-shaped seating part 3 is formed at another side thereof.

A plurality of fixing protrusions 32 protruding at an uniform interval and formed in a substantially arc shape are formed on an upper surface edge of the seating part 3.

In addition, a cylinder-shaped boss 36 may be formed on the center of the upper surface of the seating part 3.

A plurality of latching protrusions 38 are formed on an outer circumferential surface of an end of the boss 36.

Here, it is possible to form only one of the fixing protrusions 32 and the boss 36, or both of them.

The locking part 6 is coupled and locked to be in contact with the upper surface of the seating part 3, and is connected to the member to be rotated 200.

The locking part 6 is a disc shape corresponding to a shape of the seating part 3, and its outer diameter is the same as an outer diameter of the seating part 3.

A plurality of fitting portions 64 are formed on an outer periphery of the locking part 6 to be inserted into a fixing groove 34 of the seating part 3.

The locking part 6 may be superimposed and coupled to the seating part 3 by inserting the fixing protrusion 32 of the seating part 3 into a dent between the fitting part 64 and the fitting part 64.

A through hole 62 through which the boss 36 of the body 2 passes is formed on a center of the locking part 6. The through holes 62 are formed with a plurality of latching protrusion grooves 622 corresponding to the plurality of latching protrusions 38 of the boss 36.

The latching protrusions 38 of the boss 36 form a cross shape, and thus the through holes 62 are also formed in a cross shape to correspond thereto.

Referring to FIG. 2, a latching groove 7 is formed on a bottom surface of the locking part 6 so that an elastic support 4 is selectively inserted.

The latching groove 7 includes first and second grooves 71 and 72 spaced from both sides and a rod 73 connected to both of the first and second grooves 71 and 72 and guiding a ball 46 by rolling it, and has a dumbbell shape.

As shown in FIG. 2, a plurality of latching grooves 7 are arranged at equal intervals.

An embodiment of the reverse rotation preventing means includes an elastic support 4 exerting fixing force pressurizing so as to be temporarily fixed at a predetermined position while pressuring either the seating part 3 or the locking part 6.

A plurality of embedding holes 31 are formed in the upper surface of the seating part 3, and the elastic support 4 is coupled to each embedding hole 31.

The elastic support 4 includes an elastic body 44 inserted into the embedding hole 31 and a ball 46 supported by the elastic body 44 and the bottom surface of the locking part 6, and a ball plunger is preferable.

The elastic body 44 is a coil spring and is inserted into a case 42 inserted into the embedding hole 31. The ball 46 is inserted into a front end of the case 42 to be exposed only a part of the ball 46, and is formed by being curled and pursed inside an opening of the case 42 so as not to be released to the outside.

While it is described that the elastic support 4 is formed on the seating part 3 of the body 2 and the corresponding latching groove 7 is formed on the locking part 6, it is not limited thereto and the opposite structure is also possible.

In other words, it is possible that the elastic support 4 is formed on the locking part 6 and the corresponding latching groove 7 is formed on the seating part 3.

An embodiment of the reverse rotation preventing means includes a first locking means coupling the fitting portion 64 of the locking part 6 to the fixing protrusions 32 of the seating part 3.

The first locking means includes a locking step 642 protruding from a side of the fitting portion 64 of the locking part 6 and an insertion groove 382 formed at a side of the fixing protrusions 32 of the seating part 3, in which the locking step 642 is coupled to the insertion groove 382 to be in a fastened state.

A first blocking surface 325 is vertically formed at a side of the fixing protrusion 32 of the seating part 3 and a second blocking surface 645 is formed at another side of the fitting portion 64 of the locking part 6.

Therefore, when the reverse rotation occurs, the first blocking surface 325 and the second blocking surface 645 collide with each other to stop the reverse rotation.

An example of a reverse rotation preventing means includes a second locking means coupling the latching protrusion 38 of the boss 36 with the through hole 62 of the locking part 6.

The second locking means includes a latching step 624 formed on the upper surface of the locking part 6 and protruding spaced apart from the latching protrusion groove 622, and a seating end 626 formed between the latching step 624 and the latching protrusion groove 622, in which the latching protrusion 38 of the boss 36 is coupled to the seating end 626 to be in a fastened state.

The operation of such an embodiment of the configuration will now be described.

The driving shaft 22 of the body 2 is connected to the power generating unit 100 such as a motor,

The locking part 6 is superimposed and coupled to the seating part 3 in a male and female coupling manner in which the fitting part 64 is inserted into the fixing groove 34.

Then, the member to be rotated 200, such as an abrasive disc, is coupled to a front surface of the locking part 6.

When the rotational force of the power generating unit 100 is generated, the seating part 3 is rotated for an instant, the locking step 642 is fitted in the insertion groove 382, and at the same time, the latching protrusion 38 is coupled to the seating end 626, thereby integrating with the locking part 6.

At the same time, the ball 46 of the elastic support 4 is moved from the second groove 72 to the first groove 71 to have the fixing force.

Therefore, the rotating apparatus according to the present invention may rotate at a high speed while the locking part 6 is firmly coupled to the seating part 3 of the body 2. Accordingly, it is possible to prevent the occurrence of rocking or clearance and to prevent the reverse rotation, thereby stably rotating the member to be rotated 200.

### Embodiment 2

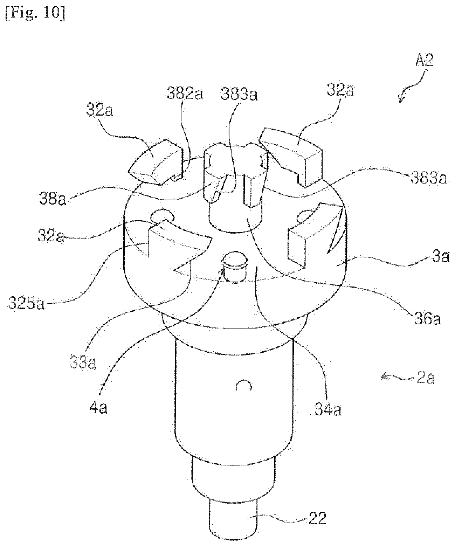

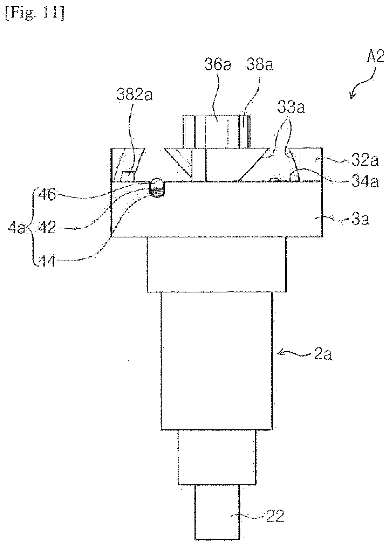

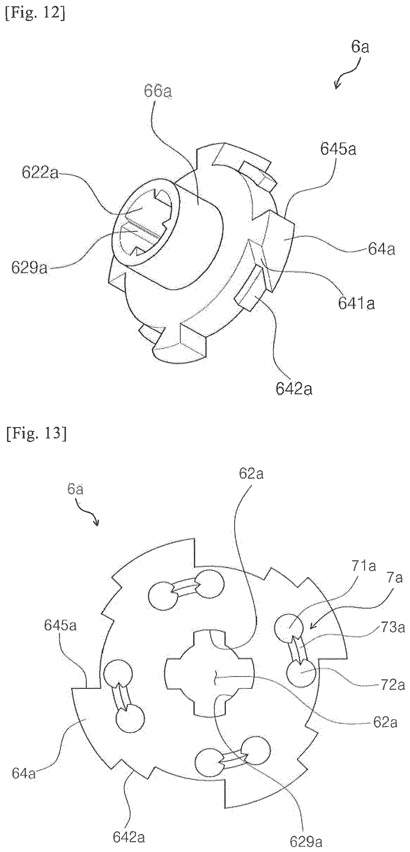

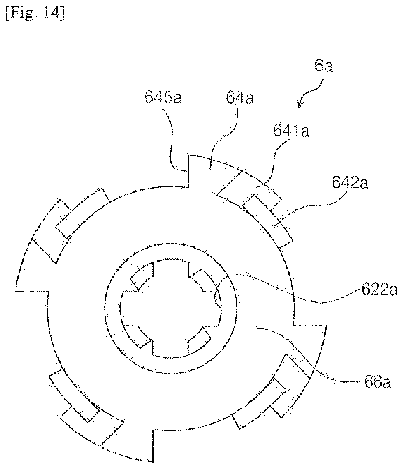

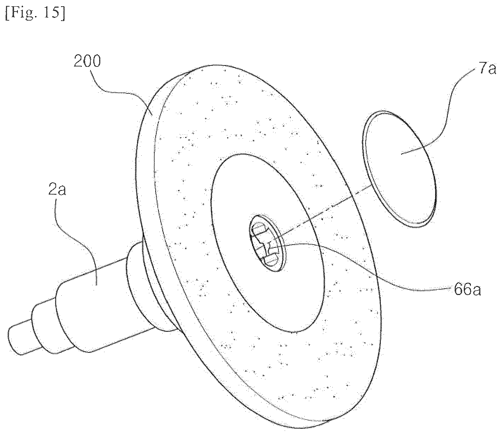

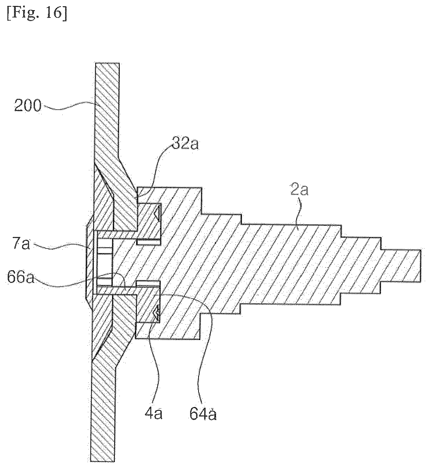

In the accompanying drawings, FIG. 10 is a perspective view illustrating a body in a rotating apparatus according to another embodiment, FIG. 11 is a front view of a body in a rotating apparatus according to another embodiment, FIG. 12 is a perspective view illustrating a locking part in a rotating apparatus according to another embodiment, FIG. 13 is a plan view of the locking part in FIG. 12, FIG. 14 is a bottom view of the locking part in FIG. 12, FIG. 15 is a perspective view illustrating an example of using a rotating apparatus according to another embodiment, and FIG. 16 is a cross-sectional view of FIG. 15.

A rotating apparatus according to another embodiment includes a body 2a to rotate a member to be rotated 200, and connected to a power generating unit; a locking part 6a coupled to the body 2a and mounted with the member to be rotated 200; and a reverse rotation preventing means maintaining a coupling state of the locking part 6a and the body 2a and preventing a reverse rotation.

A driving shaft 22 coupled to the power generating unit 100 is formed at a side of the body 2a and a disc-shaped seating part 3a is formed at another side thereof.

A plurality of fixing protrusions 32a protruding at an uniform interval and formed in a substantially arc shape are formed on an upper surface of the seating part 3a. A first inclined surface 33a is formed at a side of the fixing protrusions 32a.

The first inclined surface 33a is formed by being shaved inwardly from the upper surface of the fixing protrusions 32a to a bottom. Therefore, a lower end of the fixing protrusions 32a is shorter than an upper end thereof.

A cylinder-shaped boss 36a may be formed on a center of the upper surface of the seating part 3a.

A plurality of latching protrusions 38a are formed on an outer circumferential surface of an end of the boss 36a.

Here, it is possible to form only one of the fixing protrusions 32a and the boss 36a, or both of them.

The locking part 6a is coupled and locked to be in contact with the upper surface of the seating part 3a, and is connected to the member to be rotated 200.

The locking part 6a is a disc shape corresponding to a shape of the seating part 3a, and its outer diameter is the same as an outer diameter of the seating part 3a.

A plurality of fitting portions 64a are formed on an outer periphery of the locking part 6a to be inserted into a fixing groove 34a of the seating part 3a,

The locking part 6a may be superimposed and coupled to the seating part 3a by inserting the fixing protrusion 32a of the seating part 3a into a dent between the fitting part 64a and the fitting part 64a.

A second inclined surface 641a is formed at a side of the fitting portion 64a, and a locking step 642a is formed on the second inclined surface 641a.

A through hole 62a through which the boss 36a of the body 2a passes is formed on a center of the locking part 6a, and a tubular body 66a is formed at a side of the locking part 6a to communicate with the through hole 62a.

A plurality of latching protrusion grooves 622a corresponding to the plurality of latching protrusions 38a of the boss 36a are formed on an inner circumferential surface of the through hole 62a and the tubular body 66a.

The latching protrusion 38a of the boss 36a forms a cross shape, and correspondingly, four latching protrusion grooves 622a are arranged in a cross shape on an inner periphery of the through hole 62a.

Therefore, a protrusion 629a is naturally formed between the two latching protrusion grooves 622a.

Referring to FIG. 13, a latching groove 7a is formed on a bottom surface of the locking part 6a so that an elastic support 4a is selectively inserted.

The latching groove 7a includes first and second grooves 71a and 72a spaced from both sides and a rod 73a connected to both of the first and second grooves 71a and 72a and guiding a ball 46 by rolling it, and has a dumbbell shape.

A plurality of such latching grooves 7a are formed in a circumferential direction.

An embodiment of the reverse rotation preventing means includes an elastic support 4a exerting fixing force pressurizing so as to be temporarily fixed at a predetermined position while pressuring either the seating part 3a or the locking part 6a.

The elastic support 4a is coupled to the plurality of embedding holes 31 formed on the upper surface of the seating part 3a. As described above, the elastic support 4a includes an elastic body 44 inserted into the embedding hole 31 and a ball 46 supported by the elastic body 44 and the bottom surface of the locking part 6a.

The elastic body 44 is a coil spring and is inserted into a case 42 inserted into the embedding hole 31. The ball 46 is inserted into a front end of the case 42 to be exposed only a part of the ball 46, and is formed by being curled and pursed inside an opening of the case 42 so as not to be released to the outside.

While it is described that the elastic support 4a is formed on the seating part 3a of the body 2a and the corresponding latching groove 7a is formed on the locking part 6a, it is not limited thereto and the opposite structure is also possible.

In other words, it is possible that the elastic support 4a is formed on the locking part 6a and the corresponding latching grooves 7a is formed on the seating part 3a.

An embodiment of the reverse rotation preventing means includes a first locking means coupling the fitting portion 64a of the locking part 6a to the fixing protrusion 32a of the seating part 3a.

The first locking means includes a locking step 642a formed on the second inclined surface 641a of the fitting portion 64a of the locking part 6a, and an insertion groove 382a formed on the first inclined surface 33a of the fixing protrusions 32a of the seating part 3a. The locking step 642a is coupled to the insertion groove 382 to be in a fastened state, and the first inclined surface 33a and the second inclined surface 641a are in close contact with each other, thereby increasing coupling force.

A first blocking surface 325a is vertically formed at a side of the fixing protrusion 32a of the seating part 3a and a second blocking surface 645a is formed at another side of the fitting portion 64a of the locking part 6a.

Therefore, when the reverse rotation occurs, the first blocking surface 325a and the second blocking surface 645a collide with each other to stop the reverse rotation.

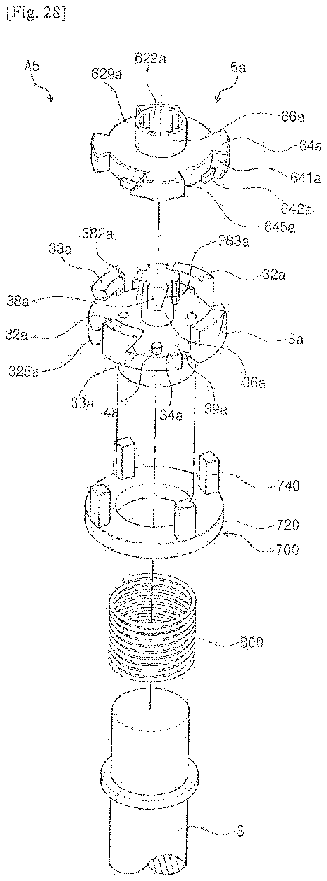

Referring to FIG. 28, an example of the reverse rotation preventing means includes a second locking means coupling the latching protrusion 38a of the boss 36a with the tubular body 66a passing through the through hole 62a of the locking part 6a.

In the second locking means, a plurality of ridges 629a are circumferentially formed on an inner peripheral surface of the tubular body 66a of the locking part 6a, in which a latching protrusion groove 622a into which the latching protrusion 38a is inserted is formed between these ridges 629a.

A third inclined surface 383a is formed at a side of the latching protrusion 38a, and correspondingly, a fourth inclined surface is formed at a side of the ridge 629a of the tubular body 66a.

As such, the latching protrusion 38a of the boss 36a is inserted into the latching protrusion groove 622a of the tubular body 66a, and both sides of the latching protrusion 38a are supported by the ridge 629a, thereby maintaining a stable coupling state.

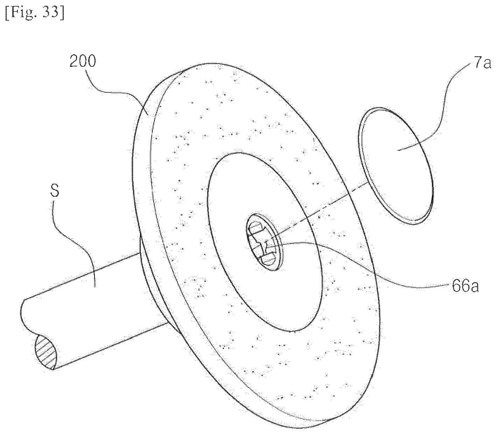

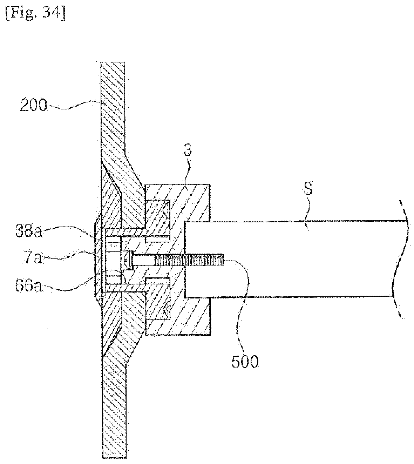

Referring to FIGs. 33 and 34, after the coupling of the body 2a and the locking part 6a, the member to be rotated 200 such as an abrasive disc is coupled to an outside of the tubular body 66a, and then a cover 7a is coupled to prevent exposure of the tubular body 66a.

The cover 7a is coupled to cover the entire surface of the abrasive disc, and the material of the cover 7a may include an abrasive material such as sandpaper, nonwoven fabric, paper, or wool. The cover 7a is detachably coupled, and may be attached to an outer surface of the abrasive disc using, for example, a velcro fastener.

### Embodiment 3

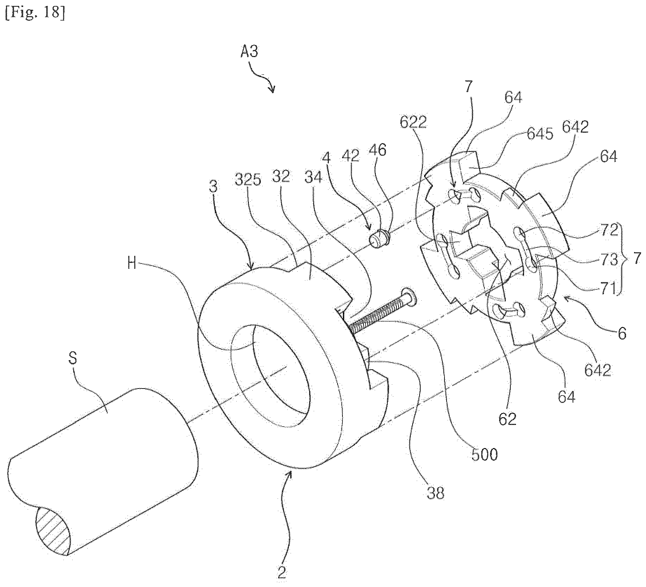

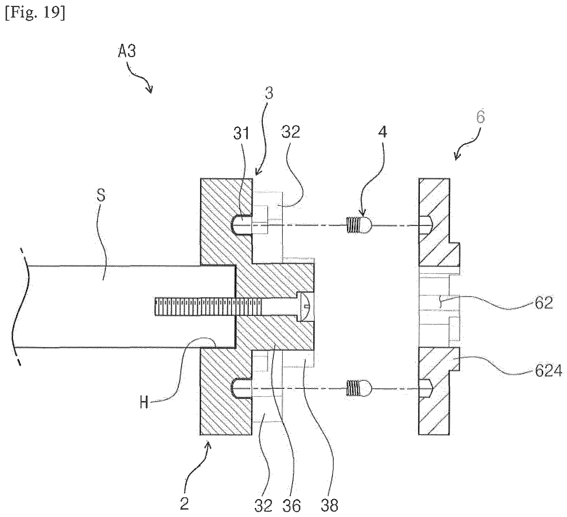

As shown in FIGs. 18 and 19, a rotating apparatus A3 according to a third embodiment includes a body 2 connected to a driving shaft S of a power generating unit to rotate a member to be rotated 200, the body including a coupling unit which couples with the driving shaft S of the power generating unit formed at a side of the body, a seating part 3 formed at another side of the body, and a plurality of fixing protrusions 32 circumferentially formed on an upper surface of the seating part 3; a locking part 6 coupled to the upper surface of the seating part to make in contact with the upper surface of the seating part, the locking part performing a locking function, and connected to a member to be rotated 200; and a reverse rotation preventing means maintaining a coupling state between the locking part 6 and the body 2 and preventing a reverse rotation.

The body 2 is integrally formed with the driving shaft S of the power generating unit, or a receiving groove H is formed in the body 2 to be separated from or coupled to the driving shaft S.

The member to be rotated 200 is rotated by the rotational force of the power generating unit 100, and an example thereof includes an abrasive disc of a hand grinder.

Of course, the member to be rotated 200 is not limited to the abrasive disc but may be widely applied.

The receiving home H into which the driving shaft S of the power generating unit 100 is fixed is formed at a side of the body 2 and a disc-shaped seating part 3 is formed at another side thereof.

A plurality of fixing protrusions 32 protruding at an uniform interval and formed in a substantially arc shape are circumferentially formed on an upper surface edge of the seating part 3.

In addition, a cylinder-shaped boss 36 is formed on the center of the upper surface of the seating part 3.

A plurality of latching protrusions 38 are formed on an outer circumferential surface of the boss 36.

According to the coupling unit in an embodiment, the receiving groove H is formed in the body 2, and the driving shaft S of the power generating unit is fitted and coupled to the receiving groove H.

The driving shaft S is forcibly fitted by forced indentation so as not to be released from the receiving groove H.

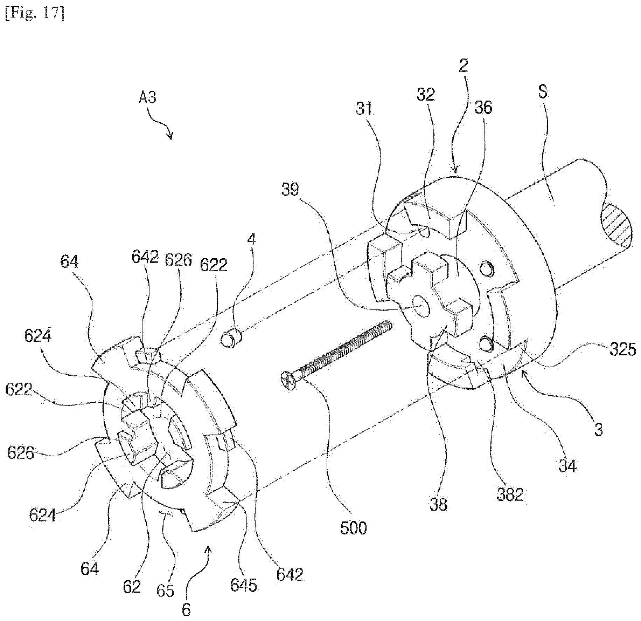

As shown in FIGs. 17 to 20, the body 2 includes a through passage 39 passing through from an upper portion thereof, and a fastening member inserted into the through passage 39.

A side of the fastening member is supported in close contact with an upper end of the through passage 39, and another side thereof is coupled to the driving shaft S of the power generating unit.

According to an example, the fastening member is a bolt 500.

A head of the bolt 500 is supported in close contact with the upper end of the through passage 39, and a thread of the lower portion thereof is screwed into a center of the driving shaft S.

Accordingly, the driving shaft S inserted into the receiving groove H may be firmly fixed so as not to be released.

### Embodiment 4

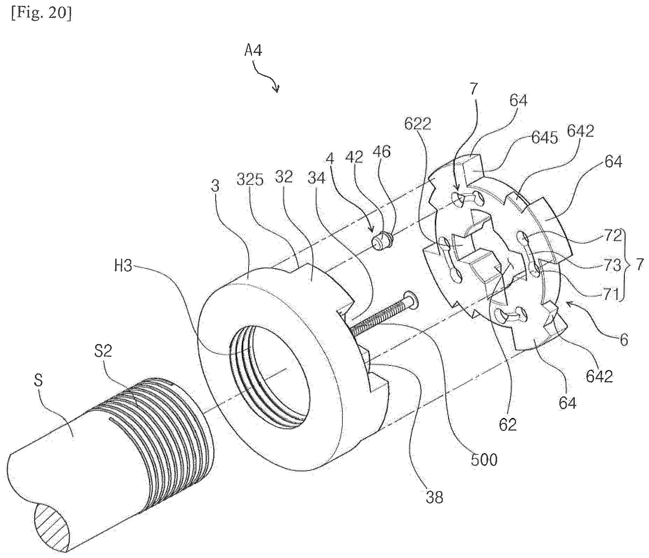

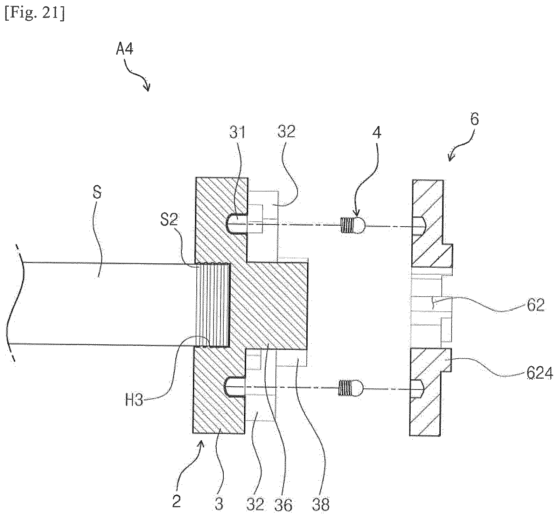

Referring to FIGs. 20 and 21, a coupling unit according to a fourth embodiment A4 includes a thread S2 formed at a side of an outer circumferential surface of the driving shaft S, and a corresponding thread H3 formed on an inner circumferential surface of the receiving groove H of the body 2, thereby being fixed by mutual screwing.

It is possible to form only one of the fixing protrusions 32 and the boss 36, or both of them.

The locking part 6 is coupled to be in contact with the upper surface of the seating part 3 thereby performing a locking function, and is connected to the member to be rotated 200.

The locking part 6 is a disc shape corresponding to a shape of the seating part 3, and its outer diameter is the same as an outer diameter of the seating part 3.

A plurality of fitting portions 64 are formed on an outer periphery of the locking part 6 to be inserted into a fixing groove 34 of the seating part 3.

The locking part 6 may be superimposed and coupled to the seating part 3 by inserting the fixing protrusion 32 of the seating part 3 into a dent 65 between the fitting part 64 and the fitting part 64.

A through hole 62 through which the boss 36 of the body 2 passes is formed on a center of the locking part 6.

The through holes 62 are formed with a plurality of latching protrusion grooves 622 corresponding to the plurality of latching protrusions 38 of the boss 36.

The latching protrusions 38 of the boss 36 form a cross shape, and thus the through holes 62 is also formed in a cross shape to correspond thereto.

Referring to FIG. 18, a latching groove 7 is formed on a bottom surface of the locking part 6 so that an elastic support 4 is selectively inserted.

The latching groove 7 includes first and second grooves 71 and 72 spaced from both sides and a rod 73 connected to both of the first and second grooves 71 and 72 and guiding a ball 46 by rolling it, and has a dumbbell shape.

As shown in FIG. 18, a plurality of latching grooves 7 are arranged at equal intervals.

An embodiment of the reverse rotation preventing means includes an elastic support 4 exerting fixing force pressurizing so as to be temporarily fixed at a predetermined position while pressuring either the seating part 3 or the locking part 6.

A plurality of embedding holes 31 are formed in the upper surface of the seating part 3, and the elastic support 4 is coupled to each embedding hole 31.

The elastic support 4 includes an elastic body 44 inserted into the embedding hole 31 and a ball 46 supported by the elastic body 44 and the bottom surface of the locking part 6, and a ball plunger is preferable.

The elastic body 44 is a coil spring and is inserted into a case 42 inserted into the embedding hole 31. The ball 46 is inserted into a front end of the case 42 to be exposed only a part of the ball 46, and is formed by being curled and pursed inside an opening of the case 42 so as not to be released to the outside.

While it is described that the elastic support 4 is formed on the seating part 3 of the body 2 and the corresponding latching groove 7 is formed on the locking part 6, it is not limited thereto and the opposite structure is also possible.

In other words, it is possible that the elastic support 4 is formed on the locking part 6 and the corresponding latching groove 7 is formed on the seating part 3.

An embodiment of the reverse rotation preventing means includes a first locking means coupling the fitting portion 64 of the locking part 6 to the fixing protrusion 32 of the seating part 3.

The first locking means includes a locking step 642 protruding from a side of the fitting portion 64 of the locking part 6 and an insertion groove 382 formed at a side of the fixing protrusions 32 of the seating part 3, in which the locking step 642 is coupled to the insertion groove 382 to be in a fastened state.

A first blocking surface 325 is vertically formed at a side of the fixing protrusion 32 of the seating part 3 and a second blocking surface 645 is formed at another side of the fitting portion 64 of the locking part 6.

Therefore, when the reverse rotation occurs, the first blocking surface 325 and the second blocking surface 645 collide with each other to stop the reverse rotation.

An example of a reverse rotation preventing means includes a second locking means coupling the latching protrusion 38 of the boss 36 with the through hole 62 of the locking part 6.

The second locking means includes a latching step 624 formed on the upper surface of the locking part 6 and protruding spaced apart from the latching protrusion groove 622, and a seating end 626 formed between the latching step 624 and the latching protrusion groove 622, in which the latching protrusion 38 of the boss 36 is coupled to the seating end 626 to be in a fastened state.

The operation of such an embodiment of the configuration will now be described.

The driving shaft 22 of the body 2 is connected to the power generating unit 100 such as a motor.

The locking part 6 is superimposed and coupled to the seating part 3 in a male and female coupling manner in which the fitting part 64 is inserted into the fixing groove 34.

Then, the member to be rotated 200, such as an abrasive disc, is coupled to a front surface of the locking part 6.

When the rotational force of the power generating unit 100 is generated, the seating part 3 is rotated for an instant, the locking step 642 is fitted in the insertion groove 382, and at the same time, the latching protrusion 38 is coupled to the seating end 626, thereby integrating with the locking part 6.

At the same time, the ball 46 of the elastic support 4 is moved from the second groove 72 to the first groove 71 to have the fixing force.

Therefore, the rotating apparatus according to the present invention may rotate at a high speed while the locking part 6 is firmly coupled to the seating part 3 of the body 2. Accordingly, it is possible to prevent the occurrence of rocking or clearance and to prevent the reverse rotation, thereby stably rotating the member to be rotated 200.

### Embodiment 5

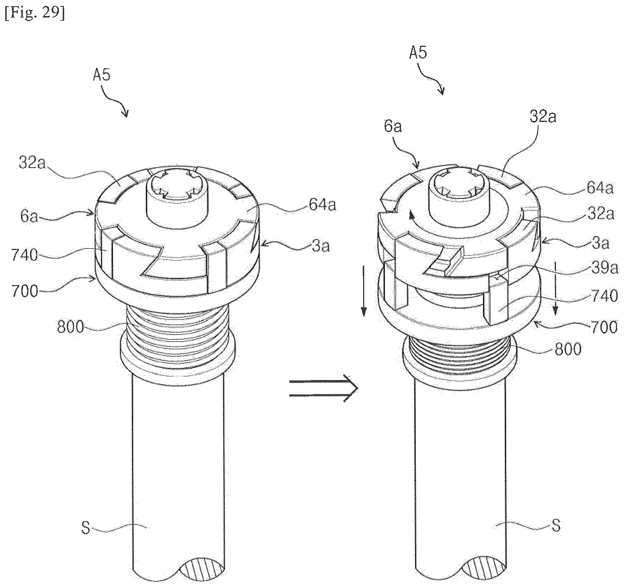

Referring to FIGs. 28 and 29, a rotating apparatus A5 according to a fifth embodiment includes a body 2a to rotate a member to be rotated 200, and connected to a power generating unit; a locking part 6a coupled to the body 2a and mounted with the member to be rotated 200; and a reverse rotation preventing means maintaining a coupling state of the locking part 6a and the body 2a and preventing a reverse rotation.

A driving shaft 22 coupled to the power generating unit 100 is formed at a side of the body 2a and a disc-shaped seating part 3a is formed at another side thereof.

A plurality of fixing protrusions 32a protruding at an uniform interval and formed in a substantially arc shape are formed on an upper surface of the seating part 3a. A first inclined surface 33a is formed at a side of the fixing protrusions 32a. A groove 39a is formed adjacent to the fixing protrusion 32a.

The first inclined surface 33a is formed by being shaved inwardly from the upper surface of the fixing protrusions 32a to a bottom. Therefore, a lower end of the fixing protrusions 32a is shorter than an upper end thereof.

The rotating apparatus according to an embodiment includes a fixing member 700 fitted and coupled to a side of the body 2a to be lifted and lowered, and having a holder 720 formed on an upper surface thereof on which a protrusion 740 inserted into the groove 39a is formed.

The rotating apparatus according to an embodiment includes an actuator 800 formed on the driving shaft S to lift and lower the fixing member 700.

As shown in FIG. 28, the actuator 800 is a spring.

Alternatively, the actuator 800 may be a hydraulic cylinder or a pneumatic cylinder.

When the fixing member 700 is lifted by the actuator 800, the projection 740 is inserted into the groove 39a.

The holder 720 is in the form of a ring-shaped circular plate having a hole at a center thereof, and four protrusions 740 are arranged a circumferential direction at an uniform interval on an upper of the holder.

As shown in FIG. 28, the holder 720 may be a single ring-shaped plate member, but may also be a divided form.

A protrusion 740 may be formed on an upper surface of each of the divided holders 720, and each of the divided holders 720 may be individually supported and lifted/lowered by the actuator 800 in an elastic manner.

A cylinder-shaped boss 36a may be formed on a center of the upper surface of the seating part 3a.

A plurality of latching protrusions 38a are formed on an outer circumferential surface of an end of the boss 36a.

Here, it is possible to form only one of the fixing protrusions 32a and the boss 36a, or both of them.

The locking part 6a is coupled and locked to be in contact with the upper surface of the seating part 3a, and is connected to the member to be rotated 200.

The locking part 6a is a disc shape corresponding to a shape of the seating part 3a, and its outer diameter is the same as an outer diameter of the seating part 3a.

A plurality of fitting portions 64a are formed on an outer periphery of the locking part 6a to be inserted into a fixing groove 34a of the seating part 3a.

The locking part 6a may be superimposed and coupled to the seating part 3a by inserting the fixing protrusion 32a of the seating part 3a into a dent between the fitting part 64a and the fitting part 64a.

As such, when the force for lowering the fixing member 700 is removed, the fixing member 700 is lifted by means of the elastic force of the actuator 800 and thus the protrusion 740 is inserted into the groove 39a, and fills an empty space between the fitting portion 64a and the fitting portion 64a, thereby stably fixing the locking part 6a without shaking.

A second inclined surface 641a is formed at a side of the fitting portion 64a of the locking part 6a, and a locking step 642a is formed on the second inclined surface 641a.

A through hole 62a through which the boss 36a of the body 2a passes is formed on a center of the locking part 6a, and a tubular body 66a communicating with the through hole 62a is formed at a side of the locking part 6a.

A plurality of latching protrusion grooves 622a corresponding to the plurality of latching protrusions 38a of the boss 36a are formed on an inner circumferential surface of the through hole 62a and the tubular body 66a.

The latching protrusion 38a of the boss 36a forms a cross shape, and correspondingly, four latching protrusion grooves 622a are arranged in a cross shape on an inner periphery of the through hole 62a.

Therefore, a protrusion 629a is naturally formed between the two latching protrusion grooves 622a.

A latching groove 7a is formed on a bottom surface of the locking part 6a so that an elastic support 4a is selectively inserted.

The latching groove 7a includes first and second grooves 71a and 72a spaced from both sides and a rod 73a connected to both of the first and second grooves 71a and 72a and guiding a ball 46 by rolling it, and has a dumbbell shape.

A plurality of such latching grooves 7a are formed in a circumferential direction.

An embodiment of the reverse rotation preventing means includes an elastic support 4a exerting fixing force pressurizing so as to be temporarily fixed at a predetermined position while pressuring either the seating part 3a or the locking part 6a.

The elastic support 4a is coupled to the plurality of embedding holes 31 formed on the upper surface of the seating part 3a. As described above, the elastic support 4a includes an elastic body 44 inserted into the embedding hole 31 and a ball 46 supported by the elastic body 44 and the bottom surface of the locking part 6a.

The elastic body 44 is a coil spring and is inserted into a case 42 inserted into the embedding hole 31. The ball 46 is inserted into a front end of the case 42 to be exposed only a part of the ball 46, and is formed by being curled and pursed inside an opening of the case 42 so as not to be released to the outside.

While it is described that the elastic support 4a is formed on the seating part 3a of the body 2a and the corresponding latching groove 7a is formed on the locking part 6a, it is not limited thereto and the opposite structure is also possible.

In other words, it is possible that the elastic support 4a is formed on the locking part 6a and the corresponding latching grooves 7a is formed on the seating part 3a.

An embodiment of the reverse rotation preventing means includes a first locking means coupling the fitting portion 64a of the locking part 6a to the fixing protrusion 32a of the seating part 3a.

The first locking means includes a locking step 642a formed on the second inclined surface 641a of the fitting portion 64a of the locking part 6a, and an insertion groove 382a formed on the first inclined surface 33a of the fixing protrusions 32a of the seating part 3a. The locking step 642a is coupled to the insertion groove 382 to be in a fastened state, and the first inclined surface 33a and the second inclined surface 641a are in close contact with each other, thereby increasing coupling force.

A first blocking surface 325a is vertically formed at a side of the fixing protrusion 32a of the seating part 3a and a second blocking surface 645a is formed at another side of the fitting portion 64a of the locking part 6a.

Therefore, when the reverse rotation occurs, the first blocking surface 325a and the second blocking surface 645a collide with each other to stop the reverse rotation.

### Embodiment 6

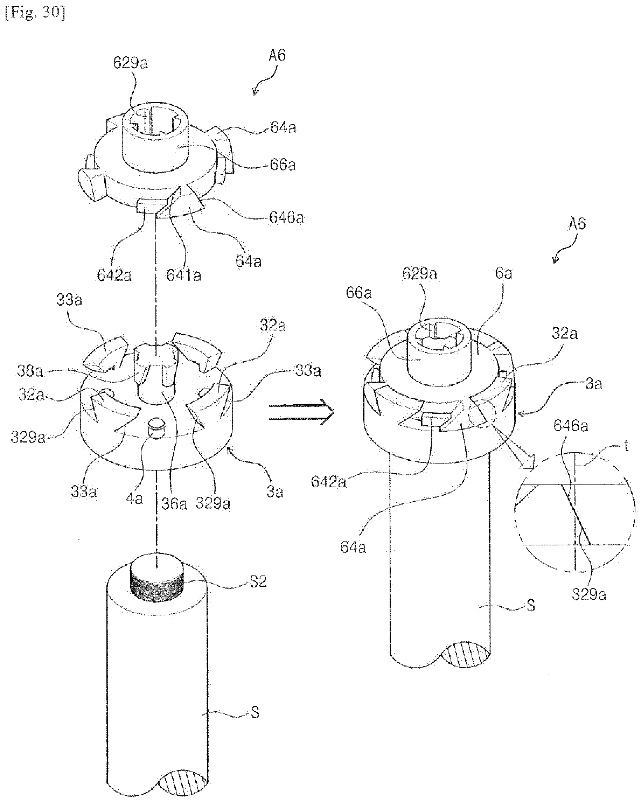

Referring to FIG. 30 and according to a sixth embodiment A6, a first inclined surface 33a is formed at a side of the fixing protrusions 32a of the seating part 3a, a fifth inclined surface 329a is formed at another side thereof, and correspondingly, a sixth inclined surface 646a is formed at another side of the fitting portion 64a of the locking part 6a.

Accordingly, the fifth inclined surface 329a and the sixth inclined surface 646a are in contact with each other and are obliquely coupled, such that the fixing force may be increased so as not to weaken the coupling.

Preferably, once the fifth inclined surface 329a and the sixth inclined surface 646a are in contact with each other, the balanced force may be evenly distributed on both sides when bisecting with a vertical virtual line t.

Referring to FIG. 30, an example of the reverse rotation preventing means includes a second locking means coupling the latching protrusion 38a of the boss 36a with the tubular body 66a passing through the through hole 62a of the locking part 6a.

In the second locking means, a plurality of protrusion 629a are circumferentially formed on an inner peripheral surface of the tubular body 66a of the locking part 6a, in which a latching protrusion groove 622a into which the latching protrusion 38a is inserted is formed between these protrusions 629a.

A third inclined surface 383a is formed at a side of the latching protrusion 38a, and correspondingly, a fourth inclined surface is formed at a side of the protrusion 629a of the tubular body 66a.

As such, the latching protrusion 38a of the boss 36a is inserted into the latching protrusion groove 622a of the tubular body 66a, and both sides of the latching protrusion 38a are supported by the protrusion 629a, thereby maintaining a stable coupling state.

Referring to FIG. 33, after the coupling of the body 2a and the locking part 6a, the member to be rotated 200 such as an abrasive disc is coupled to an outside of the tubular body 66a, and then a cover 7a is coupled to prevent exposure of the tubular body 66a.

The cover 7a is coupled to cover the entire surface of the abrasive disc, and the material of the cover 7a may include an abrasive material such as sandpaper, nonwoven fabric, paper, or wool. The cover 7a is detachably coupled, and may be attached to an outer surface of the abrasive disc using, for example, a velcro fastener.

### Embodiment 7

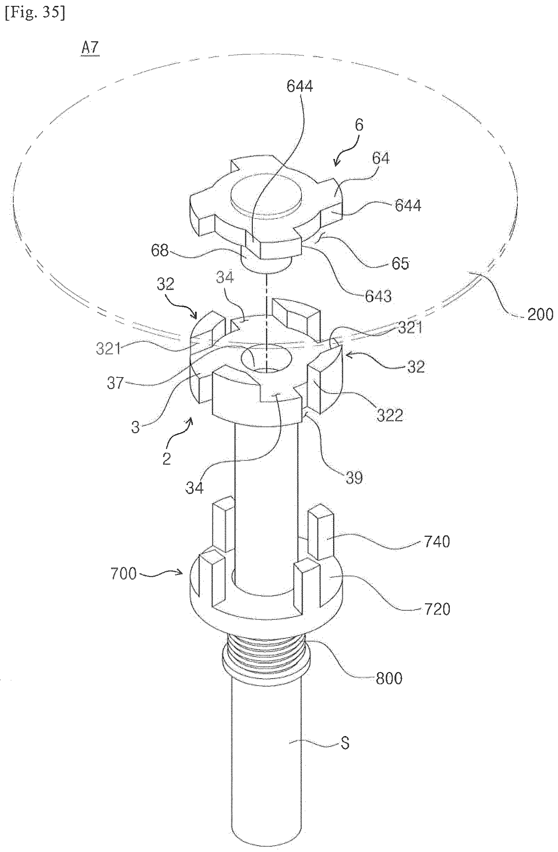

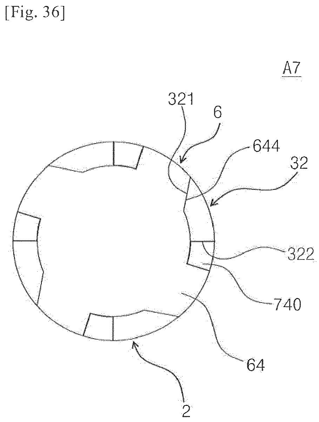

FIG, 35 is an exploded perspective view illustrating a rotating apparatus according to a seventh embodiment of the present invention, and FIG. 36 is a coupled plan view illustrating a coupled example in FIG. 35.

A rotating apparatus A7 according to the seventh embodiment includes a body 2 connected to a driving shaft S of a power generating unit (not shown) to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled to the upper surface of the seating part 3 to make in contact with the upper surface of the seating part, the locking part performing a locking function, and connected to the member to be rotated 200.

The power generating is typically a motor, but may be various other motors.

The member to be rotated 200 may be mainly an abrasive blade, a cutting cutter or the like, but is not necessarily limited thereto and may be attaching equipment requiring various rotational operations.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3.

The fixing protrusions 32 of the seating part 3 are inserted into a concavely recessed dent 65 between the fitting portion 64 and the fitting portion 64, thereby making it possible for the locking part 6 to be coupled to the seating part 3.

The fixing protrusions 32 are formed in an arc shape, the four fixing protrusions constitute one set, and each of the fixing protrusions of the set is arranged at equal intervals.

A first inclined surface 321 is formed at a side of each of the fixing protrusions 32 to face a center of the seating part 3, and a first vertical surface 322 cut vertically is formed at another side thereof.

A second vertical surface 643 corresponding to the first vertical surface 322 of the fixing protrusions 32 is formed at a side of the fitting portion 64, and a second inclined surface 644 corresponding to the first inclined surface 321 is formed at another side thereof. The the second inclined surface 644 is inclined toward an outer side from a center of the locking part 6.

A cylindrical protruding boss 68 is formed in a center of a lower surface of the locking part 6.

Correspondingly, a coupling hole 37, in which the boss 8 of the locking part 6 is inserted, is formed in a center of the seating part 3.

The operation of the seventh embodiment A7 will now be described.

The driving shaft 22 of the body 2 is connected to the power generating unit 100 such as a motor.

The member to be rotated 200, such as an abrasive disc, is coupled to a front surface of the locking part 6.

Then, the locking part 6 is superimposed and coupled to the seating part 3 in a male and female coupling manner in which the fitting part 64 is inserted into the fixing groove 34.

When the rotational force of the power generating unit 100 is generated, the seating part 3 is rotated for an instant, and the second inclined surface 644 of the fitting portion 64 is brought into tight contact with the first vertical surface 322 of the fixing protrusion 32 to be integrated.

Therefore, the rotating apparatus according to the present invention may rotate at a high speed while the locking part 6 is firmly coupled to the seating part 3 of the body 2. Accordingly, it is possible to prevent the occurrence of rocking or clearance and to prevent the reverse rotation, thereby stably rotating the member to be rotated 200.

A groove 39 is formed adjacent to the fixing protrusion 32 formed on the upper surface of the seating part 3, and the rotating apparatus according to an embodiment includes a fixing member 700 fitted and coupled to the driving shaft S of the body 2 to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720.

The actuator 800 may be selected from a spring, a hydraulic cylinder, and a pneumatic cylinder.

When the fixing member 700 is lifted by the actuator 800, the protrusion 740 may be inserted into the groove 39a and locked.

The holder 720 is in the form of a ring-shaped circular plate having a hole at a center thereof, and four protrusions 740 are arranged a circumferential direction at an uniform interval on an upper of the holder.

As such, the fixing member 700 is lifted by the elastic force of the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### Embodiment 8

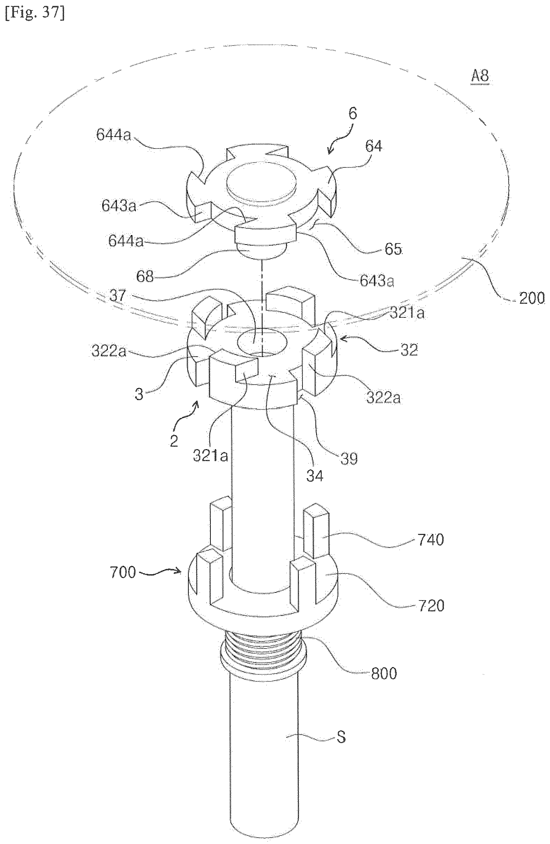

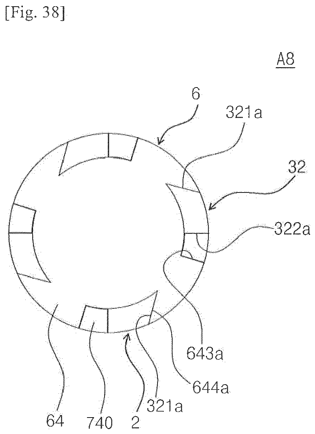

FIG, 37 is an exploded perspective view illustrating a rotating apparatus according to an eighth embodiment of the present invention, and FIG. 38 is a coupled plan view illustrating a coupled example in FIG. 37.

A rotating apparatus A8 according to the eighth embodiment includes a body 2 connected to a driving shaft S of a power generating unit to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled to the upper surface of the seating part 3 to make in contact with the upper surface of the seating part, the locking part performing a locking function, and connected to the member to be rotated 200.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3.

The fixing protrusions 32 of the seating part 3 are inserted into the recessed dent 65 between the fitting portion 64 and the fitting portion 64, thereby making it possible for the locking part 6 to be coupled to the seating part 3.

The fixing protrusions 32 are formed in an arc shape, the four fixing protrusions constitute one set, and each of the fixing protrusions of the set is arranged at equal intervals.

A first-a inclined surface 321a inclined toward an outer side from a center of the seating part 3 is formed at a side of the fixing protrusions 32, and a first-a vertical surface 322a is formed at another side thereof.

A second-a vertical surface 643a corresponding to the first-a vertical surface 322a of the fixing protrusions 32 is formed at a side of the fitting portion 64 of the locking part 6, and a second-a inclined surface 644a corresponding to the first-a inclined surface 321a is formed at another side thereof. The second-a inclined surface 644a is inclined toward an outer side from a center of the locking part 6.

A cylindrical protruding boss 68 is formed in a center of a lower surface of the locking part 6.

Correspondingly, a coupling hole 37, in which the boss 8 of the locking part 6 is inserted, is formed in a center of the seating part 3.

The operation of the eighth embodiment A8 will now be described.

The driving shaft 22 of the body 2 is connected to the power generating unit 100 such as a motor.

The member to be rotated 200, such as an abrasive disc, is coupled to a front surface of the locking part 6.

Then, the locking part 6 is superimposed and coupled to the seating part 3 in a male and female coupling manner in which the fitting part 64 is inserted into the fixing groove 34.

When the rotational force of the power generating unit 100 is generated, the seating part 3 is rotated for an instant, and the second-a inclined surface 643a of the fitting portion 64 of the locking part 6 is brought into tight contact with the first-a vertical surface 322a of the fixing protrusion 32, and the first-a inclined surface 321a and the second-a inclined surface 644a are in tight contact with each other to be integrated.

Therefore, the rotating apparatus according to the present invention may rotate at a high speed while the locking part 6 is firmly coupled to the seating part 3 of the body 2. Accordingly, it is possible to prevent the occurrence of rocking or clearance and to prevent the reverse rotation, thereby stably rotating the member to be rotated 200.

A groove 39 is formed adjacent to the fixing protrusion 32 formed on the upper surface of the seating part 3, and the rotating apparatus according to an embodiment includes a fixing member 700 fitted and coupled to the driving shaft S of the body 2a to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720.

The actuator 800 may be selected from a spring, a hydraulic cylinder, and a pneumatic cylinder.

When the fixing member 700 is lifted by the actuator 800, the protrusion 740 may be inserted into the groove 39a and locked.

The holder 720 is in the form of a ring-shaped circular plate having a hole at a center thereof, and four protrusions 740 are arranged a circumferential direction at an uniform interval on an upper of the holder.

As such, the fixing member 700 is lifted by the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### Embodiment 9

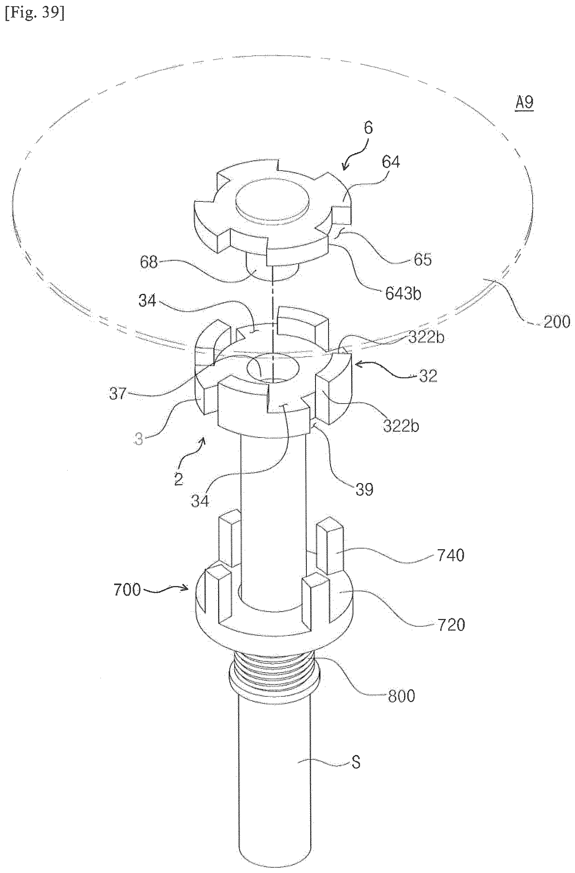

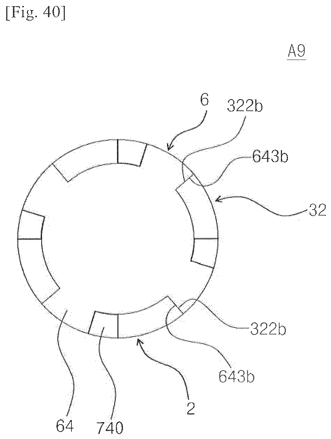

FIG. 39 is an exploded perspective view illustrating a rotating apparatus according to a ninth embodiment of the present invention, and FIG. 40 is a coupled plan view illustrating a coupled example in FIG. 39.

A rotating apparatus A9 according to the ninth embodiment includes a body 2 connected to a driving shaft S of a power generating unit to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled to the upper surface of the seating part 3 to make in contact with the upper surface of the seating part, the locking part performing a locking function, and connected to the member to be rotated 200.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3.

The fixing protrusions 32 of the seating part 3 are inserted into the concavely recessed dent 65 between the fitting portion 64 and the fitting portion 64, thereby making it possible for the locking part 6 to be coupled to the seating part 3.

The fixing protrusions 32 are formed in an arc shape, the four fixing protrusions constitute one set, and each of the fixing protrusions of the set is arranged at equal intervals.

A vertical surface 322b formed by being cut perpendicularly is formed on both sides of each of the fixing protrusions 32.

A vertical surface 643b corresponding to the vertical surface 322b of the fixing protrusions 32 is formed on both sides of the fitting portion 64.

The operation of the rotating apparatus A9 according to the ninth embodiment is similar to the operation of the seventh embodiment A7, and thus, redundant description will be omitted.

A cylindrical boss 68 is formed at a center of a lower surface of the locking part 6, and a plurality of latching protrusions 682 are formed on an outer circumferential surface of the boss 68.

A coupling hole 37 through which the boss 68 of the locking part passes is formed at a center of the seating part 3, and a plurality of latching protrusion grooves 372 corresponding to the plurality of latching protrusions 682 of the boss 68 are formed on the coupling hole 37.

A groove 39 is formed adjacent to the fixing protrusion 32 formed on the upper surface of the seating part 3, and the rotating apparatus according to an embodiment includes a fixing member 700 fitted and coupled to the driving shaft S of the body 2 to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720.

The actuator 800 may be selected from a spring, a hydraulic cylinder, and a pneumatic cylinder.

When the fixing member 700 is lifted by the actuator 800, the protrusion 740 may be inserted into the groove 39a and locked.

The holder 720 is in the form of a ring-shaped circular plate having a hole at a center thereof, and four protrusions 740 are arranged a circumferential direction at an uniform interval on an upper of the holder.

As such, the fixing member 700 is lifted by the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### Embodiment 10

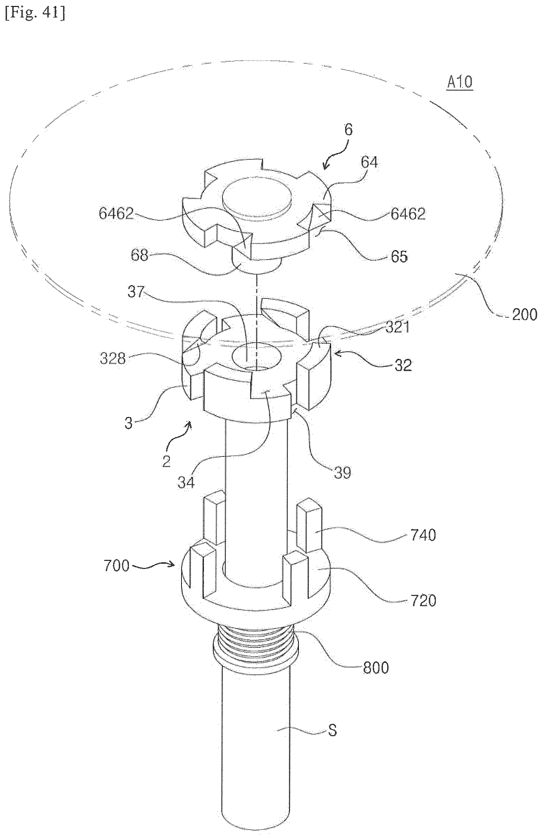

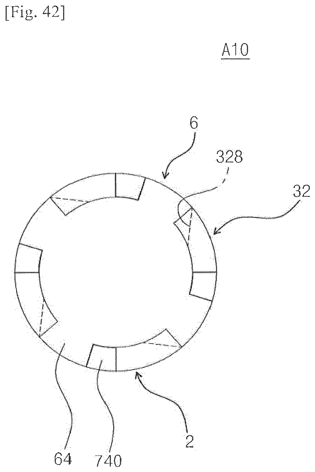

FIG. 41 is an exploded perspective view illustrating a rotating apparatus according to a tenth embodiment of the present invention, and FIG. 42 is a coupled plan view illustrating a coupled example in FIG. 41.

As shown in FIGs. 41 and 42, a rotating apparatus A10 according to the tenth embodiment includes a body 2 connected to a driving shaft S of a power generating unit to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled the upper surface of the seating part 3 to make in contact with the upper surface of the seating part, the locking part performing a locking function, and connected to the member to be rotated 200.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3.

The fixing protrusions 32 of the seating part 3 are inserted into the concavely recessed dent 65 between the fitting portion 64 and the fitting portion 64, thereby making it possible for the locking part 6 to be coupled to the seating part 3.

The fixing protrusions 32 are an arc shape, and a fifth inclined surface 328 where a portion of an upper edge facing the center of the seating part 3 is obliquely cut is formed on the fixing protrusions 32. The fifth inclined surface 328 is cut obliquely inwardly and downwardly from a front end of the upper edge, and thus, the cut surface thereof is formed obliquely.

Correspondingly, a sixth-2 inclined surface 6462 inclined toward an upper surface of the locking part 6 and corresponding to the fifth inclined surface 328 is formed at a side of the fitting portion 64 and the dent 65 of the locking part 6.

The operation of the rotating apparatus A10 according to the ninth embodiment is similar to the operation of the seventh embodiment A7, and thus, redundant description will be omitted.

A cylindrical boss 68 is formed at a center of a lower surface of the locking part 6, and a plurality of latching protrusions 682 are formed on an outer circumferential surface of the boss 68.

A coupling hole 37 through which the boss 68 of the locking part passes is formed at a center of the seating part 3, and a plurality of latching protrusion grooves 372 corresponding to the plurality of latching protrusions 682 of the boss 68 are formed on the coupling hole 37.

A groove 39 is formed adjacent to the fixing protrusion 32 formed on the upper surface of the seating part 3, and the rotating apparatus according to an embodiment includes a fixing member 700 fitted and coupled to the driving shaft S of the body 2 to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720,

The actuator 800 may be selected from a spring, a hydraulic cylinder, and a pneumatic cylinder.

When the fixing member 700 is lifted by the actuator 800, the protrusion 740 may be inserted into the groove 39a and locked.

The holder 720 is in the form of a ring-shaped circular plate having a hole at a center thereof, and four protrusions 740 are arranged a circumferential direction at an uniform interval on an upper of the holder,

As such, the fixing member 700 is lifted by the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### Embodiment 11

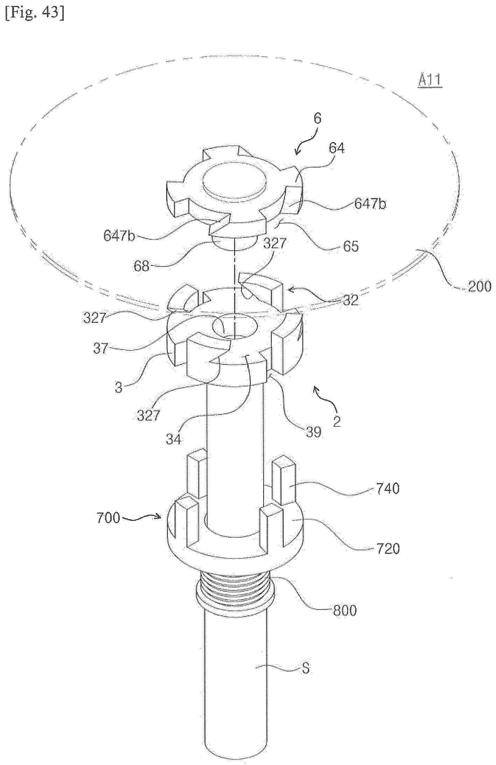

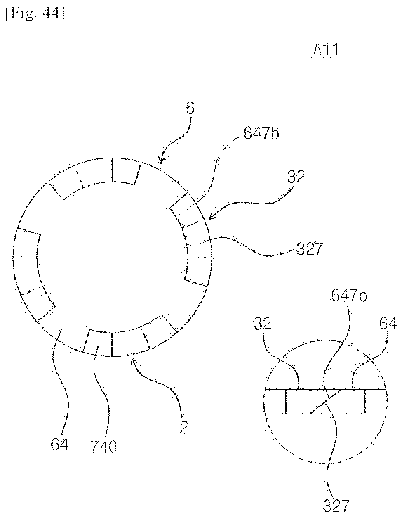

FIG. 43 is an exploded perspective view illustrating a rotating apparatus according to an eleventh embodiment of the present invention, and FIG. 44 is a coupled plan view illustrating a coupled example in FIG. 43.

As shown in FIGs. 43 and 44, a rotating apparatus A11 according to the eleventh embodiment includes a body 2 connected to a driving shaft S of a power generating unit to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled to the upper surface of the seating part 3 to make in contact with the upper surface of the seating part, the locking part performing a locking function, and connected to the member to be rotated 200.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3.

The fixing protrusions 32 of the seating part 3 are inserted into the concavely recessed dent 65 between the fitting portion 64 and the fitting portion 64, thereby making the locking part 6 to be coupled to the seating part 3.

The fixing protrusions 32 are formed in an arc shape, the four fixing protrusions constitute one set, and each of the fixing protrusions of the set is arranged at equal intervals.

The seventh inclined surface 327 is formed on each of the fixing protrusions 32 to have an oblique cut surface inclined from an upper of a side of the fixing protrusion to a lower of the side.

In order to be correspondingly coupled to this, the seventh-b inclined surface 647b inclined toward a lower surface of the locking part 6 is formed at a side of the fitting portion 64.

The operation of the rotating apparatus A11 according to the eleventh embodiment is similar to the operation of the seventh embodiment A7, and thus, redundant description will be omitted.

A cylindrical boss 68 is formed at a center of a lower surface of the locking part 6, and a plurality of latching protrusions 682 are formed on an outer circumferential surface of the boss 68.

A coupling hole 37 through which the boss 68 of the locking part 6 passes is formed at a center of the seating part 3, and a plurality of latching protrusion grooves 372 corresponding to the plurality of latching protrusions 682 of the boss 68 are formed on the coupling hole 37.

A groove 39 is formed adjacent to the fixing protrusion 32 formed on the upper surface of the seating part 3, and the rotating apparatus according to an embodiment includes a fixing member 700 fitted and coupled to the driving shaft S of the body 2 to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720.

The actuator 800 may be selected from a spring, a hydraulic cylinder, and a pneumatic cylinder.

When the fixing member 700 is lifted by the actuator 800, the protrusion 740 may be inserted into the groove 39a and locked.

When the force to lower the fixing member 700 is removed, the fixing member 700 is lifted by the actuator 800 such that the projection 740 may be inserted into the groove 39 and locked.

The holder 720 is in the form of a ring-shaped circular plate having a hole at a center thereof, and four protrusions 740 are arranged a circumferential direction at an uniform interval on an upper of the holder.

As such, the fixing member 700 is lifted by the elastic force of the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### Embodiment 12

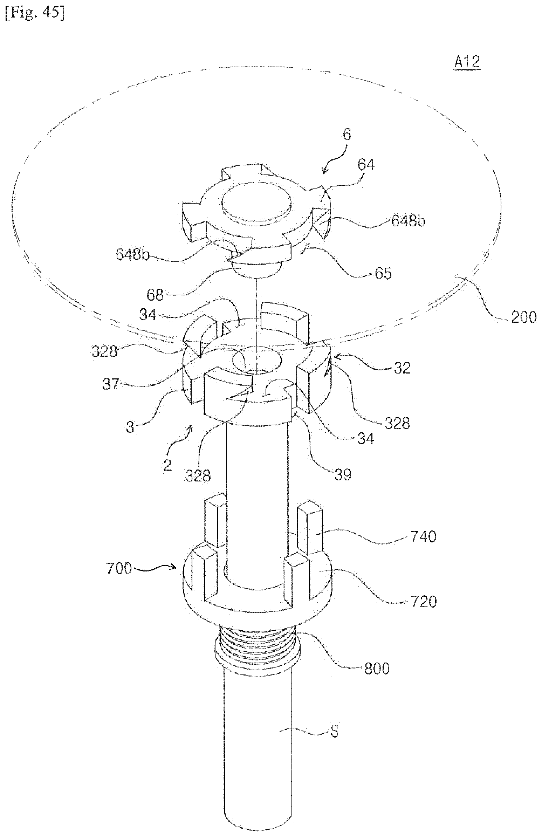

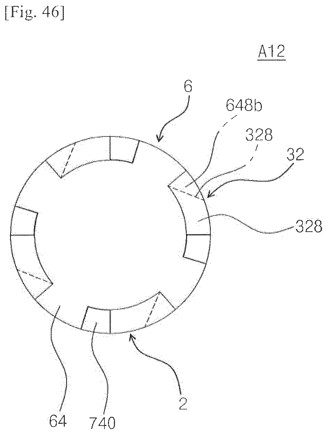

FIG. 45 is an exploded perspective view illustrating a rotating apparatus according to a twelfth embodiment of the present invention, and FIG. 46 is a coupled plan view illustrating a coupled example in FIG, 45.

As shown in FIGs. 45 and 46, a rotating apparatus A12 according to the twelfth embodiment includes a body 2 connected to a driving shaft S of a power generating unit to rotate a member to be rotated 200, the body including a driving shaft S connected to the power generating unit formed at a side thereof and a seating part 3 formed at another side thereof, in which a plurality of fixing protrusions 32 are formed in a circumferential direction on an upper surface of the seating part 3; and a locking part 6 coupled to the upper surface of the seating part 3 to make in contact with the upper surface of the seating part, the locking part performing a locking function, and connected to the member to be rotated 200.

A plurality of fixing protrusions 32 are arranged in a circumferential direction on an upper surface edge of the seating part 3, and a fixing groove 34 is formed between the fixing protrusions 32 and the fixing protrusions 32.

A plurality of fitting portions 64 are formed on an outer periphery of the locking part 6 to be inserted into a fixing groove 34 of the seating part 3,

The fixing protrusions 32 of the seating part 3 are inserted into the concavely recessed dent 65 between the fitting portion 64 and the fitting portion 64, thereby making the locking part 6 to be coupled to the seating part 3.

The fixing protrusions 32 are formed in an arc shape, the four fixing protrusions constitute one set, and each of the fixing protrusions of the set is arranged at equal intervals.

The fixing protrusions 32 are an arc shape, and a fifth inclined surface 328 where a portion of an upper edge facing the center of the seating part 3 is obliquely cut is formed on the fixing protrusions 32. The fifth inclined surface 328 is cut obliquely outwardly and downwardly from a front end of the upper edge, and thus, the cut surface thereof is formed obliquely.

Correspondingly, an eighth inclined surface 648b inclined toward an upper surface of the locking part 6 and corresponding to the fifth inclined surface 328 is formed at a side of the fitting portion 64 and the dent 65.

The operation of the rotating apparatus A12 according to the twelfth embodiment is similar to the operation of the seventh embodiment A7, and thus, redundant description will be omitted.

A cylindrical boss 68 is formed at a center of a lower surface of the locking part 6, and a plurality of latching protrusions 682 are formed on an outer circumferential surface of the boss 68.

A coupling hole 37 through which the boss 68 of the locking part passes is formed at a center of the seating part 3, and a plurality of latching protrusion grooves 372 corresponding to the plurality of latching protrusions 682 of the boss 68 are formed on the coupling hole 37.

A groove 39 is formed adjacent to the fixing protrusion 32 formed on the upper surface of the seating part 3, and the rotating apparatus according to an embodiment includes a fixing member 700 fitted and coupled to the driving shaft S of the body 2 to be lifted up and down, and having a holder 720 formed on an upper surface thereof on which a protrusion 740 inserted into the groove 39 is formed.

The rotating apparatus according to an embodiment includes an actuator 800 coupled to the driving shaft S to elastically support the holder 720.

The actuator 800 may be selected from a spring, a hydraulic cylinder, and a pneumatic cylinder.

When the fixing member 700 is lifted by the actuator 800, the protrusion 740 may be inserted into the groove 39a and locked.

When the force to lower the fixing member 700 is removed, the fixing member 700 is lifted by the actuator 800 such that the projection 740 may be inserted into the groove 39 and locked.

The holder 720 is in the form of a ring-shaped circular plate having a hole at a center thereof, and four protrusions 740 are arranged a circumferential direction at an uniform interval on an upper of the holder.

As such, the fixing member 700 is lifted by the elastic force of the actuator 800 such that the projection 740 is inserted into the groove 39 of the seating part 3, and the protrusion 740 is inserted into the dent 65 between the fitting portion 64 and the fitting portion 64, thereby stably maintaining the coupling state of the locking part 6, the seating part 3, and the body 2 without shaking.

### REFERENCE NUMERAL

2: body
3: seating part
4: elastic support
6: locking part
7: latching groove
22: driving shaft
32: fixing protrusion
34: fixing groove
38: latching protrusion
42: case
44: elastic body
46: ball
62: through hole
64: fitting portion
71: first groove
72: second groove
73: rod
100: power generating unit
200: member to be rotated

## Claims

1. A rotating apparatus, comprising:
a body connected to a power generating unit to rotate a member to be rotated, the body including a driving shaft coupled to the power generating unit on a side thereof, a disc-shaped seating part formed at another side thereof, and fixing protrusions protruding at a uniform interval on an edge portion of an upper surface of the seating part;
a locking part coupled to the upper surface of the seating part to make in contact with the upper surface of the seating part, the locking part performing a locking function and connected to the member to be rotated; and
a reverse rotation preventing means maintaining a coupling state between the locking part and the body, and preventing a reverse rotation.

2. The apparatus of claim 1, wherein the reverse rotation preventing means comprises an elastic support exerting fixing force so as to be temporarily fixed at a predetermined position while pressurizing either the seating part or the locking part.

3. The apparatus of claim 1, wherein the locking part is provided with a plurality of fitting portions at an outer periphery thereof, the plurality of fitting portions inserted into a fixing groove formed on the seating part.

4. The apparatus of claim 1, wherein the reverse rotation preventing means comprises a first locking means coupling a fitting portion of the locking part to the fixing protrusions of the seating part,
wherein the first locking means comprises:
a locking step protruding from a side of the fitting portion of the locking part; and
an insertion groove formed at a side of the fixing protrusions of the seating part,
wherein the locking step is coupled to the insertion groove to be in a fastened state.

5. The apparatus of claim 1, wherein a lower surface of the locking part is provided with a boss protruding therefrom, and the seating part is provided with a coupling hole into which the boss of the locking part is inserted.

6. A rotating apparatus, comprising:
a body connected to a power generating unit, such as a motor, to rotate a member to be rotated, the body including a driving shaft coupled to the power generating unit on a side thereof, a disc-shaped seating part formed at another side thereof, fixing protrusions protruding at a uniform interval on an edge portion of an upper surface of the seating part, a boss protruding from a center thereof, and a plurality of latching protrusions formed on an outer peripheral surface of the boss;
a locking part coupled to an upper surface of the seating part to make in contact with the upper surface of the seating part and provided with a through hole through which the boss of the body passes, wherein the through hole is provided with a plurality of latching protrusion grooves corresponding to the plurality of latching protrusions of the boss to perform a locking function, wherein the locking part is connected to the member to be rotated; and
a reverse rotation preventing means maintaining a coupling state between the locking part and the body, and preventing a reverse rotation.

7. The apparatus of claim 6, wherein the reverse rotation preventing means comprises an elastic support exerting fixing force so as to be temporarily fixed at a predetermined position while pressurizing either the seating part or the locking part.

8. The apparatus of claim 6, wherein the locking part is provided with a plurality of fitting portions at an outer periphery thereof, the plurality of fitting portions inserted into a fixing groove formed on the seating part.

9. The apparatus of claim 6, wherein the reverse rotation preventing means comprises:
a first locking means coupling a fitting portion of the locking part to the fixing protrusions of the seating part; and
a second locking means coupling the latching protrusions of the boss to the through hole of the locking part,
wherein the first locking means comprises a locking step protruding from a side of the fitting portion of the locking part and an insertion groove formed at a side of the fixing protrusions of the seating part, wherein the locking step is coupled to the insertion groove to be in a fastened state, and
wherein the second locking means comprises:
a latching step formed on an upper surface of the locking part and protruding spaced apart from the latching protrusion groove; and
a seating end formed between the latching step and the latching protrusion groove, wherein the latching protrusion of the boss is coupled to the seating end to be in a fastened state.

10. The apparatus of claim 9, wherein the locking part is provided with a tubular body to communicate with the through hole, the tubular body is provided with a plurality of ridges at an inner peripheral surface thereof, and a latching protrusion groove into which the latching protrusion of the boss is inserted is provided between the plurality of ridges.

11. The apparatus of claim 10, wherein a third inclined surface is formed at a side of the latching protrusion of the boss, and a fourth inclined surface is formed at a side of the ridge of the tubular body, the fourth inclined surface making in contact with and supported by the third inclined surface.

12. The apparatus of claim 1, wherein the body is integrally formed with the driving shaft of the power generating unit, or a receiving groove is formed in the body to be separated from or coupled to the driving shaft,

13. The apparatus of claim 6, wherein the body is integrally formed with the driving shaft of the power generating unit, or a receiving groove is formed in the body to be separated from or coupled to the driving shaft.

14. The apparatus of claim 6, wherein the body comprises:
a through passage passing through from an upper portion thereof; and
a fastening member inserted into the through passage,
wherein a side of the fastening member is supported in close contact with an upper end of the through passage, and another side of the fastening member is coupled to the driving shaft of the power generating unit.

15. The apparatus of claim 1, wherein the upper surface of the seating part is provided with a groove adjacent to the fixing protrusion,
wherein the rotating apparatus further comprises:
a fixing member coupled to the body to be lifted and lowered, and having a holder formed on an upper surface thereof on which a protrusion inserted into the groove is formed; and
an actuator driving the fixing member to be lifted and lowered.

16. The apparatus of claim 6, wherein the upper surface of the seating part is provided with a groove adjacent to the fixing protrusion,
wherein the rotating apparatus further comprises:
a fixing member coupled to the body to be lifted and lowered, and having a holder formed on an upper surface thereof on which a protrusion inserted into the groove is formed; and
an actuator driving the fixing member to be lifted and lowered.

17. The apparatus of claim 1, wherein a first inclined surface is formed at a side of the fixing protrusion to face a center of the seating part, and a first vertical surface cut vertically is formed at another side of the fixing protrusion;
wherein a second vertical surface corresponding to the first vertical surface of the fixing protrusion is formed at a side of the fitting portion, and a second inclined surface corresponding to the first inclined surface is formed at another side of the fitting portion, the second inclined surface inclined toward an outer side from a center of the locking part.

18. The apparatus of claim 1, wherein a first-a inclined surface inclined toward an outer side from a center of the seating part is formed at a side of the fixing protrusion, and a first-a vertical surface is formed at another side of the fixing protrusion;
wherein a second-a vertical surface corresponding to the first-a vertical surface of the fixing protrusion is formed at a side of the fitting portion, and a second-a inclined surface corresponding to the first-a inclined surface is formed at another side of the fitting portion, the second-a inclined surface inclined toward an outer side from a center of the locking part.

19. The apparatus of claim 1, wherein a vertical surface cut vertically is formed at opposite sides of the fixing protrusion;
wherein a vertical surface corresponding to the vertical surface of the fixing protrusion is formed at opposite sides of the fitting portion.

20. The apparatus of claim 1, wherein a fifth inclined surface where a portion of an upper edge facing a center of the seating part is obliquely cut is formed at the fixing protrusion, the fifth inclined surface having a cut surface inclined inwardly and downwardly from a front end of the upper edge;
wherein a sixth-2 inclined surface inclined toward an upper surface of the locking part and corresponding to the fifth inclined surface is formed at a side of the fitting portion and a dent.

21. The apparatus of claim 1, wherein a seventh inclined surface having an oblique cut surface inclined from an upper of a side of the fixing protrusion to a lower of the side is formed at the fixing protrusion;
wherein a seventh-b inclined surface inclined toward a lower surface of the locking part is formed at a side of the fitting portion in order to be coupled to the fixing protrusion.

22. The apparatus of claim 1, wherein an eighth inclined surface where a portion of an upper edge facing a center of the seating part is obliquely cut is formed at the fixing protrusion, a fifth inclined surface having a cut surface inclined outwardly and downwardly from a front end of the upper edge;
wherein an eighth inclined surface inclined toward an upper surface of the locking part and corresponding to the fifth inclined surface is formed at a side of a fitting portion and a dent.

23. The apparatus of claim 6, wherein a first inclined surface facing a center of the seating part is formed at a side of the fixing protrusion, and a first vertical surface cut vertically is formed at another side of the fixing protrusion;
wherein a second vertical surface corresponding to the first vertical surface of the fixing protrusion is formed at a side of the fitting portion, and a second inclined surface corresponding to the first inclined surface is formed at another side of the fitting portion, the second inclined surface inclined toward an outer side from a center of the locking part.

24. The apparatus of claim 6, wherein a first-a inclined surface inclined toward an outer side from a center of the seating part is formed at a side of the fixing protrusion, and a first-a vertical surface is formed at another side of the fixing protrusion;
wherein a second-a vertical surface corresponding to the first-a vertical surface of the fixing protrusion is formed at a side of the fitting portion, and a second-a inclined surface corresponding to the first-a inclined surface is formed at another side of the fitting portion, the second-a inclined surface inclined toward an outer side from a center of the locking part.

25. The apparatus of claim 6, wherein a vertical surface cut vertically is formed at opposite sides of the fixing protrusion;
wherein a vertical surface corresponding to the vertical surface of the fixing protrusion is formed at opposite sides of the fitting portion.

26. The apparatus of claim 6, wherein a fifth inclined surface where a side of an upper edge facing a center of the seating part is obliquely cut is formed at the fixing protrusion, the fifth inclined surface having a cut surface inclined inwardly and downwardly from a front end of the upper edge;
wherein a sixth-2 inclined surface inclined toward an upper surface of the locking part and corresponding to the fifth inclined surface is formed at a side of the fitting portion and a dent.

27. The apparatus of claim 6, wherein a seventh inclined surface having an oblique cut surface inclined from an upper of a side of the fixing protrusion to a lower of the side is formed at the fixing protrusion;
wherein a seventh-b inclined surface inclined toward a lower surface of the locking part is formed at a side of the fitting portion in order to be coupled to the fixing protrusion.

28. The apparatus of claim 6, wherein an eighth inclined surface where a side of an upper edge facing a center of the seating part is obliquely cut is formed at the fixing protrusion, a fifth inclined surface having a cut surface inclined outwardly and downwardly from a front end of the upper edge;
wherein an eighth inclined surface inclined toward an upper surface of the locking part and corresponding to the fifth inclined surface is formed at a side of a fitting portion and a dent.
